# EUROPEAN PATENT SPECIFICATION

(11) **EP 2 698 274 B1**
(45) Date of publication and mention of the grant of the patent: **03.05.2017**
(21) Application number: 13184887.1
(22) Date of filing: 15.06.2010
(51) Int. Cl.: B60N 2/01, B62D 31/00

(54) **Side-by-side vehicle**
Zweisitzer
Véhicule côte-à-côte

(30) Priority: 15.06.2009 US 484888; 08.06.2010 US 796495
(43) Date of publication of application: 19.02.2014
(62) Divisional of application: 10725581.2
(73) Proprietor: Polaris Industries Inc., Medina, MN 55340 (US)
(72) Inventor: Deckard, Aaron, D., Lindstrom MN, 55045 (US); Safranski, Brian, M., Strandquist MN, 56758 (US); Sunsdahl, Richard, L, Badger MN, 56714 (US); Schneider, Michael, D., Dalbo MN, 55017 (US); Hanten, Michael, J., Delano MN, 55328 (US); Johnson, Cal, W., Gem Lake MN, 55110 (US); Van Bronkhorst, Kevin, St. Croix Falls WI, 54024 (US)
(74) Representative: reuteler & cie SA

(56) References cited:
- EP-A1- 1 600 326
- EP-A2- 1 602 523
- WO-A1-03/042026
- WO-A1-03/055716
- WO-A1-2008/013564
- US-A1- 2008 023 249

## Description

The present invention relates to side-by-side all terrain vehicles having netting enclosing the seating area.

Generally, all terrain vehicles ("ATVs") and utility vehicles ("UVs") are used to carry one or two passengers and a small amount of cargo over a variety of terrains. Due to increasing recreational interest in ATVs, specialty ATVs, such as those used for trail riding, racing, and cargo hauling have entered the market place. Most ATVs include seating for up to two passengers which are either seated side-by-side or with the passenger positioned behind the driver of the ATV. Side-by-side ATVs, in which the driver and passenger are seated beside each other on laterally spaced apart seats, have become popular because of the ability to allow the passenger to share the driver's viewpoint.

WO03042026 relates to all-terrain vehicles (ATVs), and in particular ATVs in which two riders (a driver and a passenger) can be accommodated wherein the seats of the driver and passenger on the ATV are positioned such that the driver and passenger have each sufficient space to actively position themselves without significantly interfering with each other.

EP1602523 relates to an automobile, which allows all of its occupants, including those in the rear seats, total vision of the road and landscape both through the front and the sides of the vehicle.

WO03055716 relates to motor vehicle seats, of the type including a seating element and a backrest element mounted on the structure of the motor vehicle.

EP1600326 relates to a vehicle which includes a front portion seat and a rear portion seat disposed rearward of the front portion seat. The rear portion seat includes seating portions offset sideways relative to the front portion seat.

WO2008013564 and US2008023249 relate to side-by-side all-terrain vehicles having at least a pair of laterally spaced apart seating surfaces and in particular to trail compliant side-by-side all-terrain vehicles.

An utility vehicle according to the invention is defined in appended claim 1, with further embodiments defined in dependent claims. It includes a frame extending in a generally longitudinal direction, and having at least one elongate frame tube assembly comprised of plural sections and a drive train is supported by the frame. A frame tube coupler couples the frame tube sections, where the frame tube coupler comprises coupler sections associated with each coupler end, and the coupler sections having complementary interengagement elements. Fasteners retain the interengaging elements together, where the fasteners are in tension to force the complementary interengaging elements into engagement. In this manner, any shear force is substantially taken up by the complementary interengaging elements.

The above mentioned and other features of this invention, and the manner of attaining them, will become more apparent and the invention itself will be better understood by reference to the following description of embodiments of the invention as well as illustrative examples outside the scope of the invention taken in conjunction with the accompanying drawings, where:
Fig. 1 shows a left front perspective view of a vehicle according to the invention;
Fig. 2 shows a left rear perspective view of the vehicle of Fig. 1;
Fig. 3 shows a left side view of the vehicle of Fig. 1;
Fig. 4 shows a top view of the vehicle of Fig. 1;
Fig. 5 shows a front view of the vehicle of Fig. 1;
Fig. 6 shows a rear view of the vehicle of Fig. 1;
Fig. 7 shows a left side view of the vehicle similar to that of Fig. 3 showing the chassis removed and the tubular frame exposed, in which couplers couple frame tubes together according to the invention;
Fig. 8 shows the right side view of the vehicle of Fig. 7;
Fig. 9 is a front perspective view of the vehicle frame and roll cage;
Fig. 10 shows an enlarged view of the vehicle main frame showing the locations of frame couplers according to the invention;
Fig. 11 shows an enlarged view of the vehicle front frame showing the locations of frame couplers according to the invention;
Fig. 12 is a partially exploded and fragmented perspective view showing the coupler for coupling the main frame and front frame together according to the invention.
   The following figures and description sections associated therewith are illustrative of further aspects of the disclosed vehicle that do not form part of, the invention.
Fig. 13 shows a top perspective view of the roll cage;
Fig. 14 shows a cross-sectional view through lines 12-12 of Fig. 3;
Fig. 15 shows an enlarged view of the seat belt retractor;
Fig. 16 shows a perspective view of the seat poised for receipt in one of the seating areas; and
Fig. 17 shows a side view of an embodiment of the vehicle described above including collapsible side nets, with the nets in the up and latched position;
Fig. 18 shows a side view of the embodiment of the vehicle of FIG. 17 with the nets in the collapsed and unlatched position;
Fig. 19 shows a top perspective view of the pivotal bar;
Fig. 20 shows a bottom perspective view of the pivotal bar of Fig. 19;
Fig. 21 shows a bottom perspective view of the pivotal bar of Fig. 19 with the end cap removed;
Fig. 22 shows an enlarged view of the portion denoted in Fig. 21;
Fig. 23 shows an enlarged view of the portion denoted in Fig. 21;
Fig 24 shows a plan view of the pivotal bar separated, showing the netting poised for attachment to the bar;
Fig. 25 shows a plan view of a first clasp;
Fig. 26 shows a plan view of a second clasp;
Fig. 27 shows an assemble view of the pivotal bar;
Fig. 28 is a right hand side view of an alternate side net assembly;
Fig. 28A is an enlarged view of the portion denoted in Fig. 28;
Fig. 29 shows the side net assembly of Fig. 28 with the side net collapsed;
Fig. 30 shows a view of the side net post poised for receipt in the pivotal link; and
Figs. 31-33 show a diagrammatic progressive view of the side net post and pivotal link.

Corresponding reference characters indicate corresponding parts throughout the several views. The drawings are not necessarily to scale and certain features may be exaggerated in order to better illustrate and explain the present invention as well as illustrative examples.

The embodiments and illustrative examples disclosed below are not intended to be exhaustive or to limit the invention to the precise forms disclosed in the following detailed description. Rather, the embodiments and illustrative examples are chosen and described so that others skilled in the art may utilize their teachings. For example, while the following description refers primarily to UVs, certain features described herein may be applied to other applications such as ATVs, snowmobiles, motorcycles, mopeds, etc.

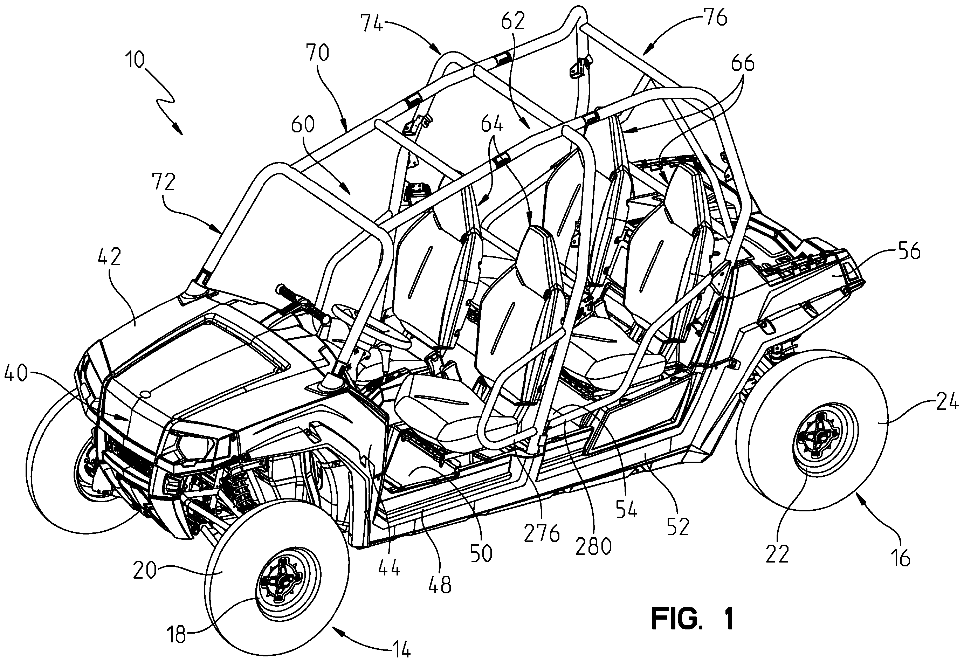

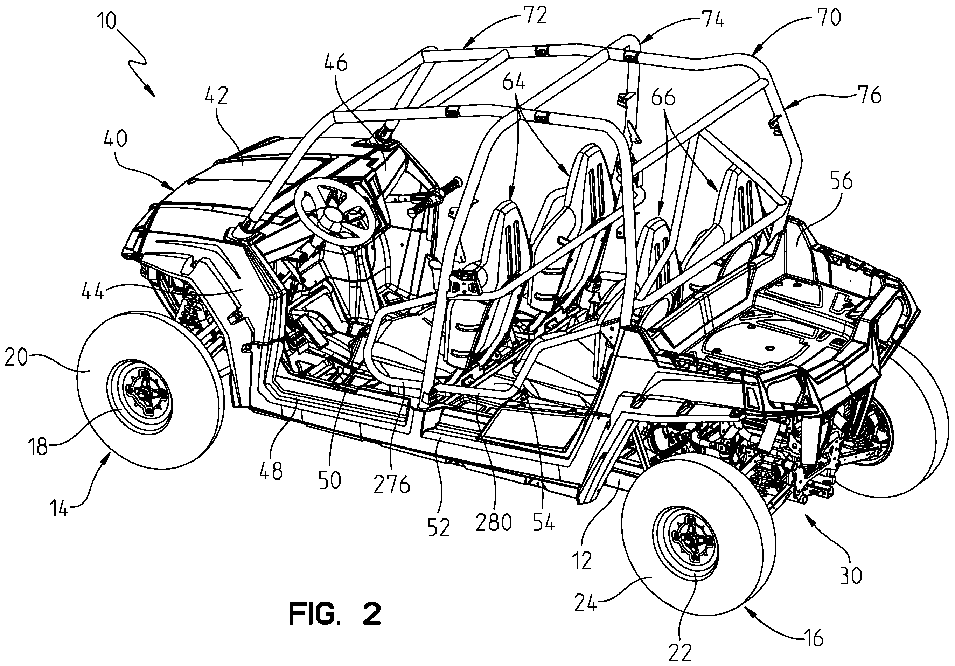

With reference first to Figs. 1-6, the vehicle of the present disclosure will be described. The vehicle is shown generally at 10 and is commonly referred to as an all terrain vehicle (ATV), a side-by-side vehicle (SxS) or a utility vehicle. As shown, vehicle 10 generally comprises a frame 12 (Fig. 2) supported by ground engaging members 14 and 16. As shown in this disclosure, ground engaging members 14 and 16 are comprised of wheels 18 and tires 20; and wheels 22 and tires 24. Vehicle 10 further comprises a drive train 30 (Fig. 2) operatively connected to frame 12 and drivingly connected to one or more of the ground engaging members 14, 16. In the present disclosure, the drive train 30 is comprised of a fuel-burning engine and transmission combination, together with a driveshaft extending between the drive train and the front ground engaging members 14. However, any drive train could be contemplated such as hybrid, fuel cell or electric.

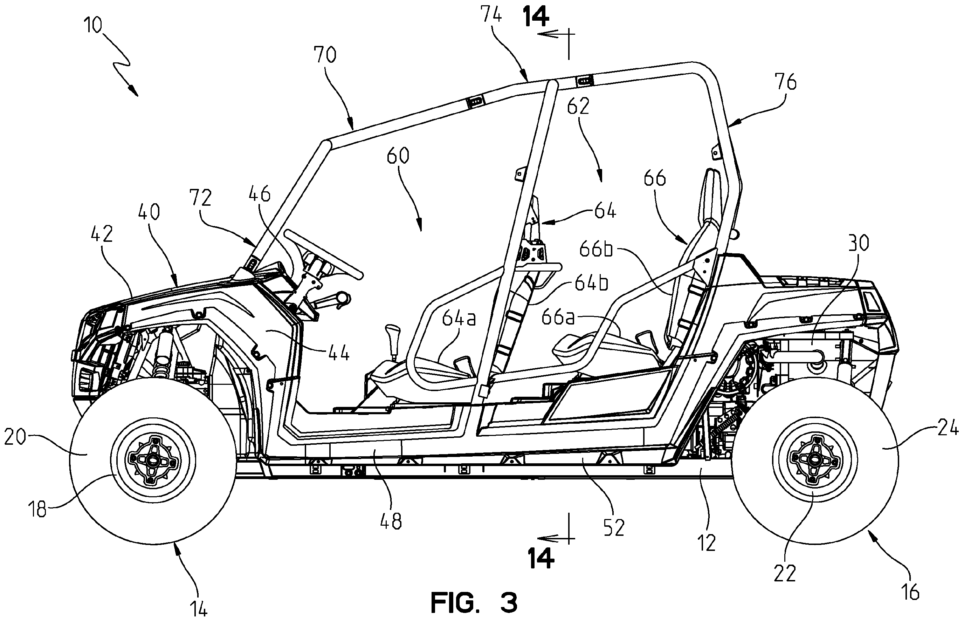

As shown in Figs. 1 and 2, vehicle 10 further includes a body portion or chassis shown generally at 40 to include a hood 42, front fender 44, dash 46, sideboard 48, front floorboard 50, rear sideboard 52, rear floorboard 54 and rear cargo area 56. As also shown, vehicle 10 is comprised of two seating areas, namely a front seating area 60 and a rear seating area 62 where front seating area 60 is comprised of side-by-side seats, shown as bucket seats 64; and rear seating area 62 is comprised of side-by-side seats, shown as bucket seats 66. As shown best in Fig. 3, front seats include a seat bottom 64a and a seat back 64b, while rear seat 66 includes a seat bottom 66a and a seat back 66b. Vehicle 10 also includes a roll cage 70 comprised of a front section 72, a center section 74, and a rear section 76, where the front 72, center 74 and rear 76 sections are comprised of a plurality of frame tubes attached to each other and to frame 12 as more fully described herein.

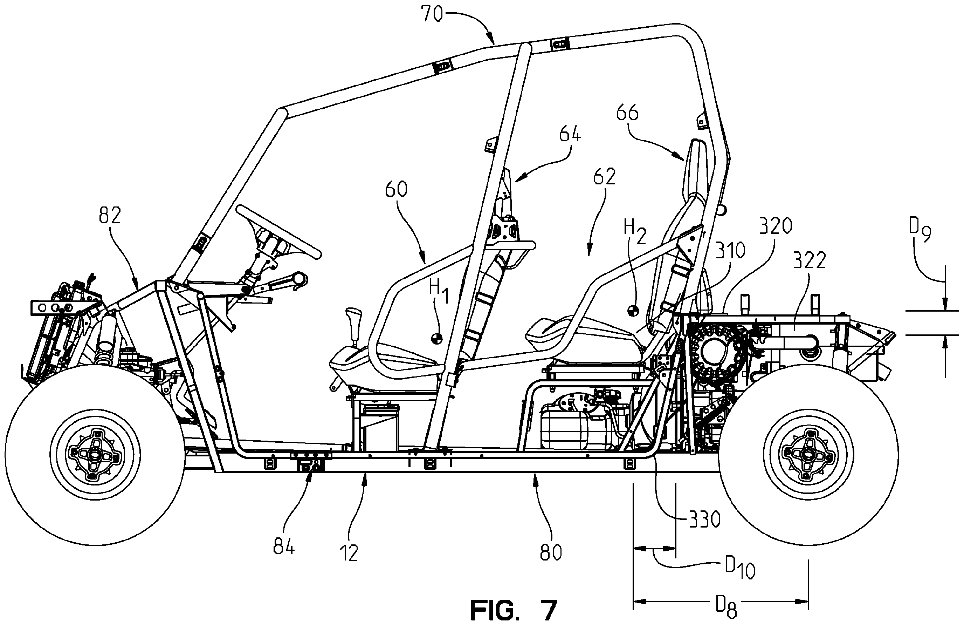

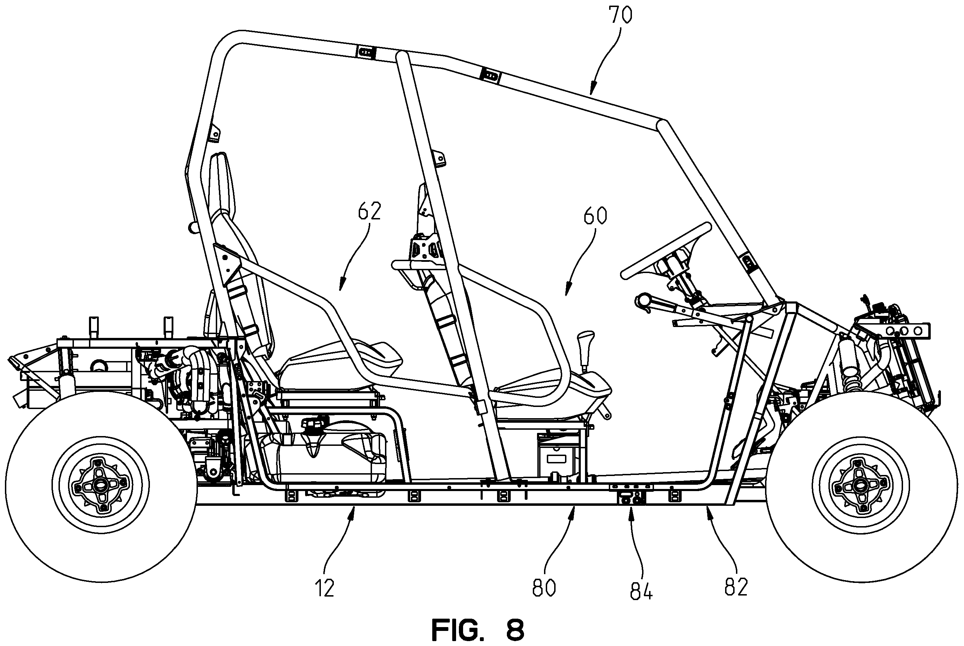

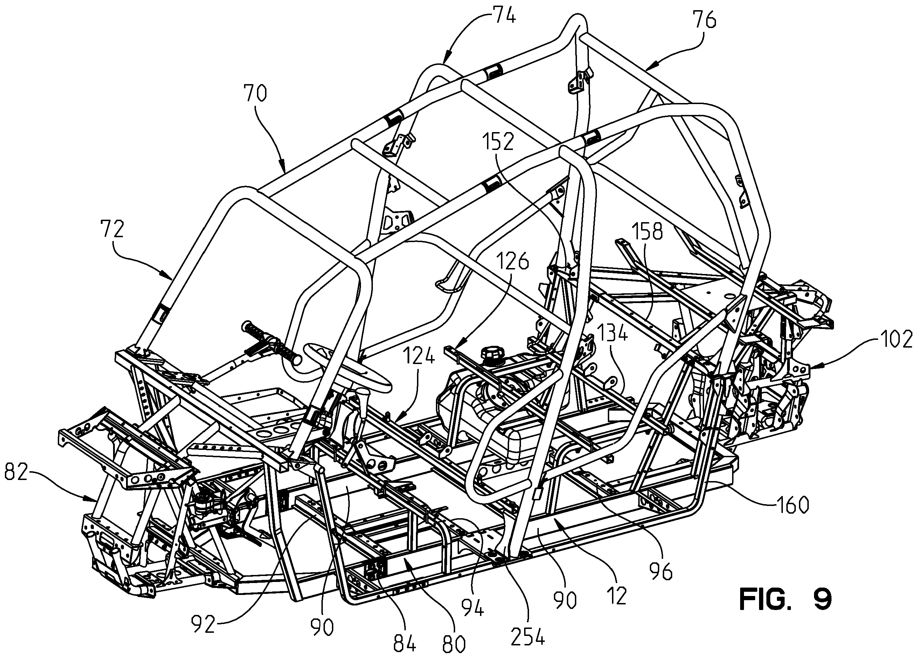

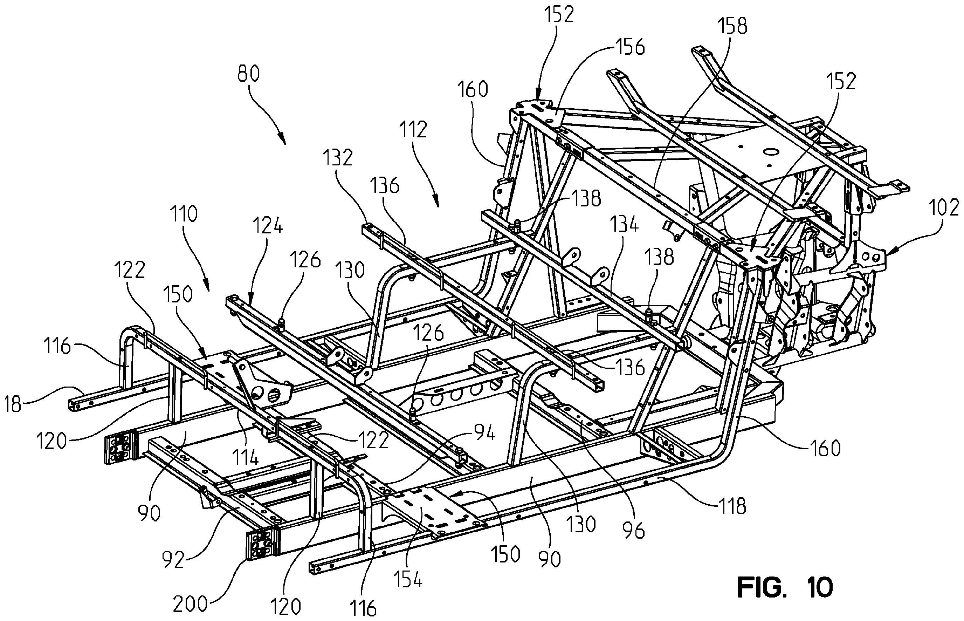

With respect now to Figs. 7-12, frame 12 will be described in greater detail. Frame 12 is generally comprised of a main frame section 80 and a front frame section 82, where the two sections are interconnected by way of couplers 84 according to the invention. With reference first to Figs. 9 and 10, the main frame section 80 is generally comprised of two longitudinal frame rails 90 interconnected by a plurality of struts such as 92, 94, 96 attaching frame rails 90 together in a predefined spaced-apart relation. Main frame section 80 also comprises a drive train mounting section 102 extending at a rear portion of main frame 80.

With respect now to Fig. 10, frame 80 also defines front seat support platform 110 and rear seat support platform 112. Front seat support platform 110 includes a transversely extending tube 114 having legs 116 attached to outer frame rail 118 and inner legs 120 directly attached to frame tubes 90. Frame tube 114 spans the distance across frame rails 118 and the frame tubes 90. With reference still to Fig. 10, frame tubes 114 include a latch hook 122 as described further herein. Front seat support platform 110 further includes a transverse frame member 124 which as best shown in Fig. 9 is attached to roll cage center section 74 as further described herein. Frame tube 124 includes latching pins 126 for inter-engagement with seats 64.

With reference still to Fig. 10, rear seat support platform 112 is comprised of frame tubes 130 which provide an elevated platform for transverse frame tubes 132 and 134. Frame tubes 132 have latch hooks 136 (similar in nature to latch hooks 122) and frame tube 134 has latching pins 138 (similar to latching pins 126).

With respect still to Fig. 10, main frame member 80 further includes roll cage mounting sections 150 and 152. As shown, mounting section 150 includes a plate 154 on each side spanning tube 90 and frame rail 118. Mounting section 152 is provided by a plate 156 provided on frame tube 158 which spans uprights 160 of frame rail 118.

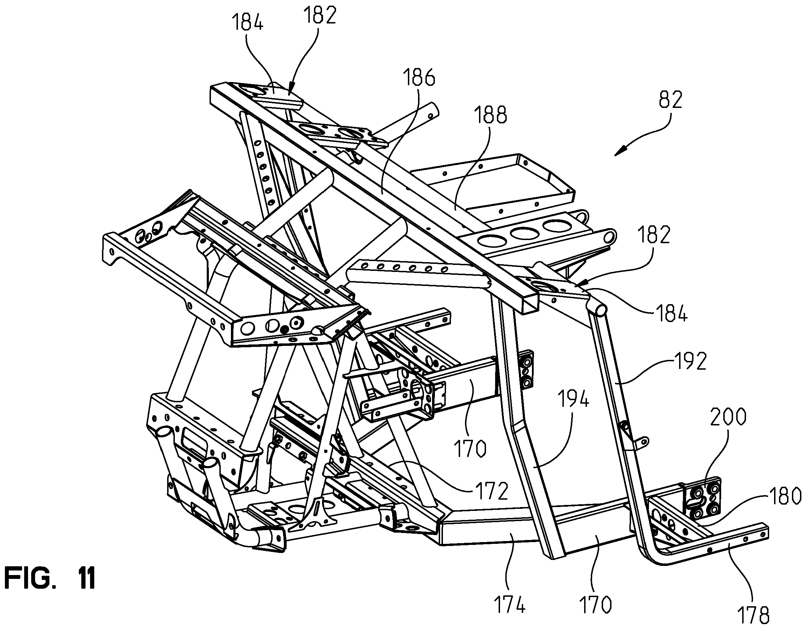

With respect now to Fig. 11, front frame member 82 will be described in greater detail. Front frame member 82 includes frame tubes 170 which complement frame tubes 90, and are held in a fixed relation by tubes 172, 174. Frame rails 178 are fixed in relation to frame tubes 170 by way of a strut 180. Front frame 82 further comprises front roll cage mounting sections 182 comprising plates 184 positioned between cross tubes 186, 188, and elevated by way of uprights 192, 194.

As described, frame 80 is comprised of main frame member 90 and front frame member 82. Splitting the frame into two separate modular subassemblies allows for easier processing of the entire vehicle 10. Due to the load on the frame tubes 90, 170, the connection according to the invention provided by coupler 84 takes place at a longitudinal position from either end of the frame 80, within a distance from the end, of approximately 30% of the length of frame 80. The coupler 84 could also be placed at the rear of frame tubes 90.

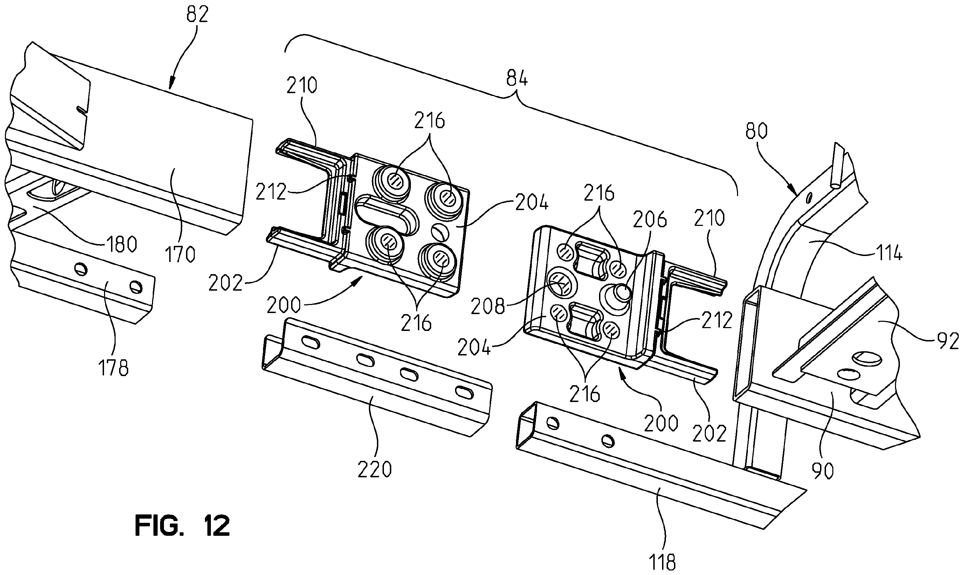

With reference now to Fig. 12, frame tube coupler 84 according to the invention is shown poised for receipt within frame tubes 90, 170. As shown, coupler 84 is comprised of individual coupler members 200. The coupler members 200 are identical, and each comprises a tube connecting section 202 and an alignment or interengaging section 204. The interengaging sections 204 include interengaging elements, shown here as projections 206 and recesses 208. Projections 206 are shown as frusto-conical in shape, and recesses have a complementary frusto-conical recessed configuration. The interengaging sections 204 further comprise apertures 216 which self align with apertures 216 in the opposite interengaging section 204 when complementary projections 206 and recesses 208 align. As also shown in Fig. 12, tube connecting sections 202 include legs 210 and stand-offs 212. Finally, a connecting bracket 220 is provided for connecting frame rails 118 and 178.

To connect main frame member 80 and front frame member 82, the individual coupler members 200 are each inserted into respective ends of the frame tubes 90, 170 until such time as stand-offs 212 abut an end edge of the frame tubes 90, 170. Stand-off 212 leaves a weld gap for welding the individual couplers 200 to the frame tubes 90, 170. The individual couplers 200 are shown welded in place to respective frame tubes 90, 170 in Figs. 10 and 11.

Coupler 84 allows alignment of frame tubes 90 and 170 as individual couplers 200 are each aligned with respective frame tubes 90, 170 and individual couplers 200 are alignable to each other. Couplers 84 also allow alignment of frame tubes 90, 170 when the main frame 80 and front frame 82 are not themselves perfectly aligned. That is, once individual coupler members are close to alignment, fasteners (not shown) are positioned into and through complementary apertures 216, whereby the fasteners may be drawn tight until the projections and recesses are in engagement with each other. This aligns the tubes 90, 170. At the same time, any shear forces on the coupler 84 is taken up through the projections and recesses, not through the fasteners.

What follows is a description of further illustrative aspects of the disclosed vehicle that do not form part of the invention.

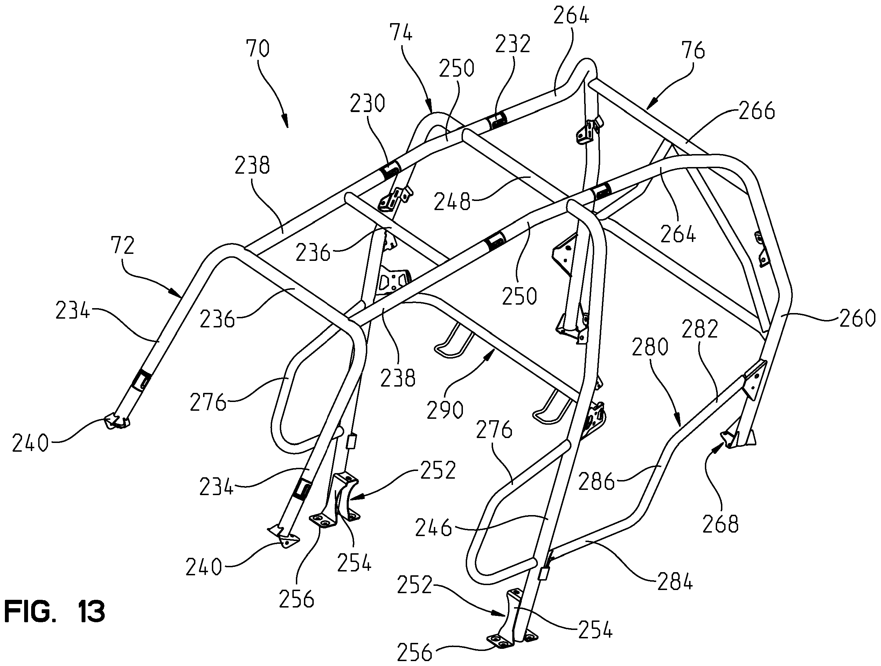

With respect now to Fig. 13, roll cage 70 is shown comprised of front 72, center 74 and rear 76 roll cage sections. Each of athe cage sections comprise plural frame tubes as shown. The cage sections are shown connected at connection joints 230 and 232. Such joints are known in the industry.

Front roll cage section 72 is comprised of uprights 234, transverse sections 236, and longitudinally extending sections 238. Mounts 240 are provided at the front and extend from uprights 234. It should be appreciated that mounts 240 cooperate with mounting sections 182 (Fig. 11) by way of fasteners (not shown).

Center roll cage section 74 is comprised of uprights 246, transverse section 248 and longitudinally extending sections 250. Mounts 252 are provided at the lower end of upright 246 and is comprised of stand-offs 254 and mounting brackets 256. It should be appreciated that mounting brackets 256 cooperate with mounting section 150 (Fig. 10) by way of fasteners (not shown).

Rear roll cage section 76 is comprised of uprights 260, transverse section 262, and longitudinally extending section 264. Mounts 268 are provided at the lower end of uprights 260 which cooperate with mounting sections 152 (Fig. 10).

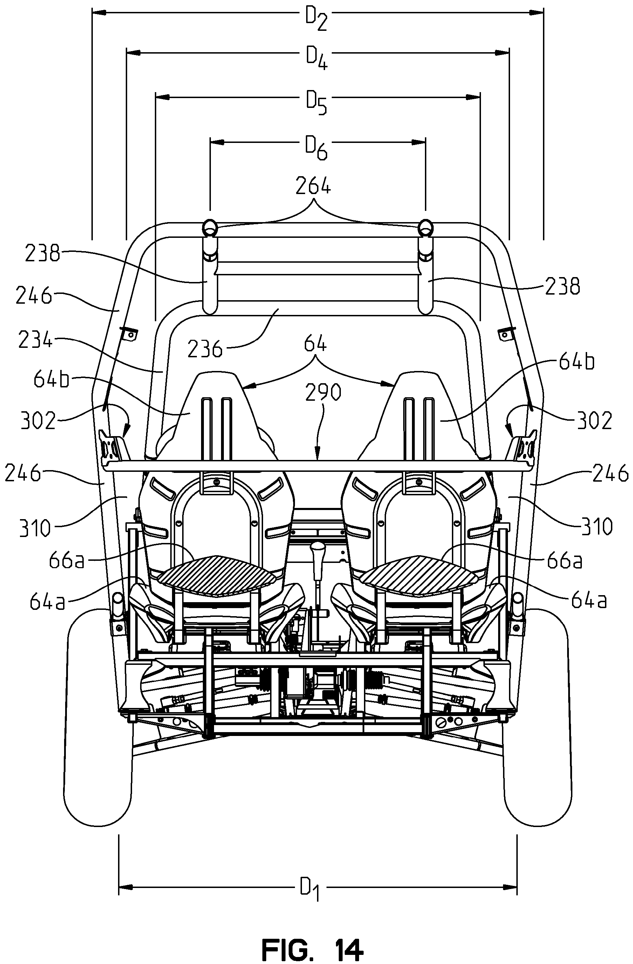

Roll cage assembly 70 comprises ergonomic features for the driver and passengers. First, supports 276 are provided on uprights 246 extending forwardly. These supports are positioned adjacent to seats 64, as shown in Figs. 1 and 2, and enclose the driver and front passenger. Second, supports 280 are provided between uprights 246 and 260, and include an upper portion 282, lower portion 284 and transition portion 286. As shown in Fig. 1, support 280 is shown in position where lower portion extends across the entry spaced above floorboard 54. Transition section 286 and upper portion 282 extend across the seat 66 and enclose the rear passengers. Finally, rear passenger hand bar 290 extends between uprights 246, and as best shown in Fig. 14, extends behind front seats 64, as described below.

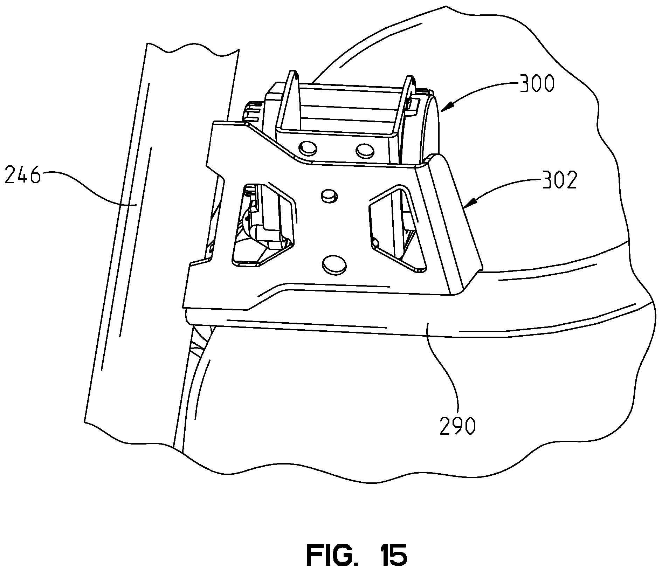

As shown in Fig. 14, rear seat bottoms 66a are shown elevated relative to front seat bottoms 64a. Thus the rear passenger hand bar 290, which extends behind front seat backs 64b is, positioned at shoulder height relative to the persons in front seats 64. As shown best in Fig. 15, seat belt retractor 300 is positioned on hand bar 290, and is attached to bracket 302 which is connected between hand bar 290 and upright 246. This places the seat belt retractor 300 in a convenient location for those in front seats 64, yet keeps the retractor away from the rear passengers.

Vehicle 10 is also ergonomically designed for the rear passenger's riding experience. For example, and with respect still to fig. 14, uprights 246 are shown flaring outwardly. For example, uprights at the frame are spaced apart by a dimension of D₁ but extend upwardly to a dimension of D₂ which is larger than D₁. This provides a spacing at 310 between uprights and seat backs 64b providing extra room for the passenger's knees.

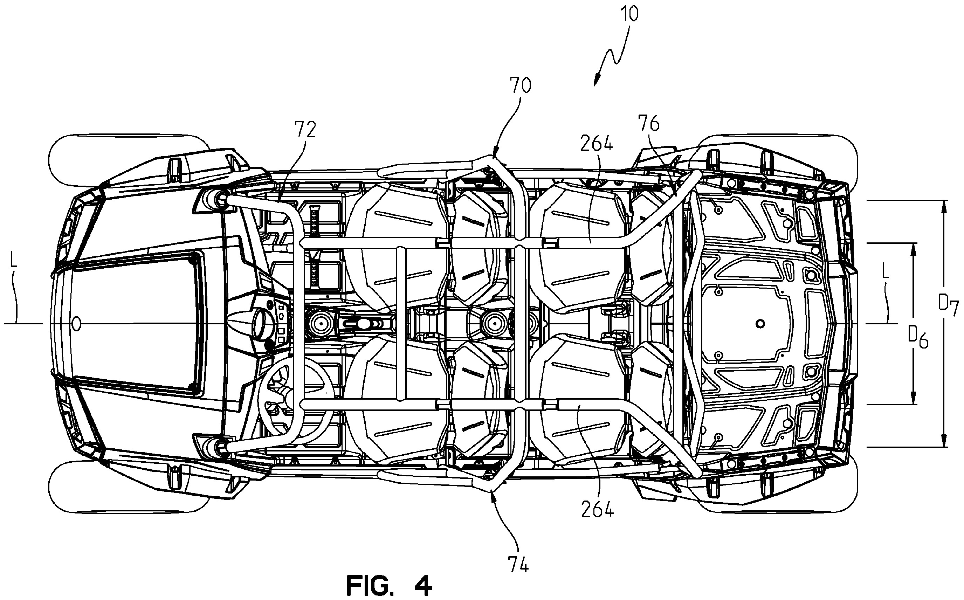

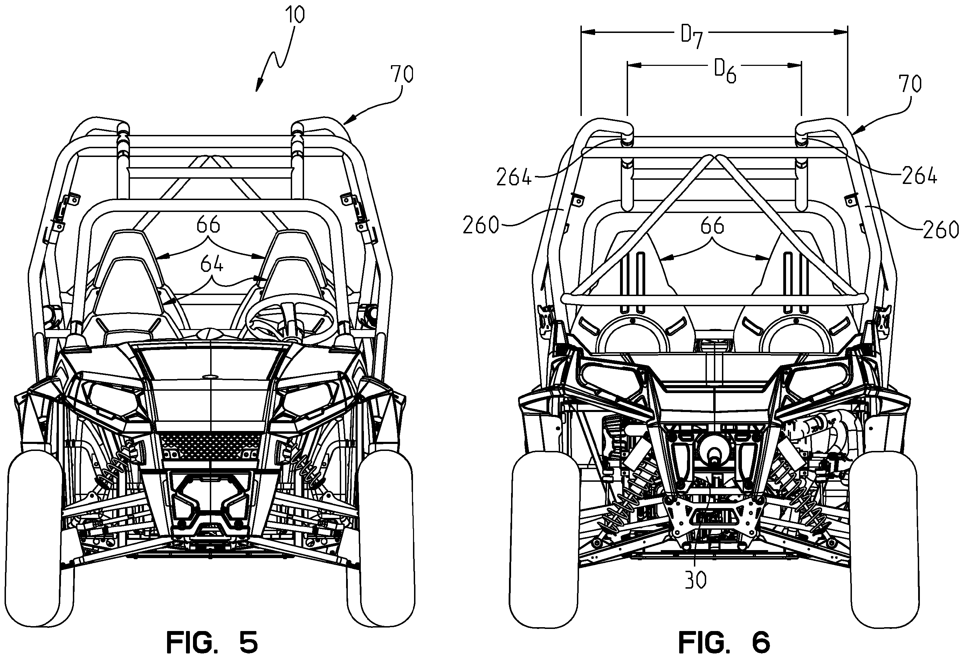

The vehicle design also provides easy ingress and egress. As shown best in Fig. 14, the driver and front passenger may easily enter vehicle 10 without contacting longitudinally extending sections 238. This is due to the fact that the distance (D₆) between sections 238 is less than the extreme position adjacent the top of uprights 234 (D₅) and is less than the distance between the extreme position adjacent the top of uprights 246 (D₄). This insetting of longitudinally extending sections 238 provides easy ingress. In a like manner relating to the rear passengers, and as best shown in Figs. 4, 6 and 14, longitudinally extending section 264 are inset from extreme positions of both uprights 246 and 260, that is D₆ is less than both D₂ and D₇ (Figs. 4 and 6). This provides easy ingress for rear passengers.

The design also provides an enhanced ride for the rear passenger. Due to the elevated rear seats 66, the rear passengers can view over the top of the front seats 64. As shown best in Fig. 7, the elevation of the seats is such that the hip pivot axis (H-point) of the rear passenger (H₂) is higher than the H-point of the driver (H₁). Also, for ride purposes, the H-point of the rear passenger (H₂) is positioned either over, or forward of, the centerline of the rear axle. As shown best in Fig. 7, H₂ and the axle centerline are spaced apart by a distance D₈. Also, in order to enhance the ride of the rear passenger, as well as keep the center of gravity low, a seating position 310 of the rear passenger is positioned lower than a top 320 of the engine 322. The seating position is the location on the seat having the highest distribution of load from the passenger while idle. This area is normally substantially adjacent to an intersecting line through the torso of the passenger and the seat bottom 66a. In the illustrated embodiment of Fig. 7, this distance is shown as D₉. Finally, seating position 310 is also forward of, a forward most point 330 of engine 322, and as shown best in Fig. 7, this distance is depicted as D₁₀. It should be appreciated that the seating positions could also be lower than the highest point 320 of engine 322 and behind the forward most point 330, if the seats laterally straddled the engine 322.

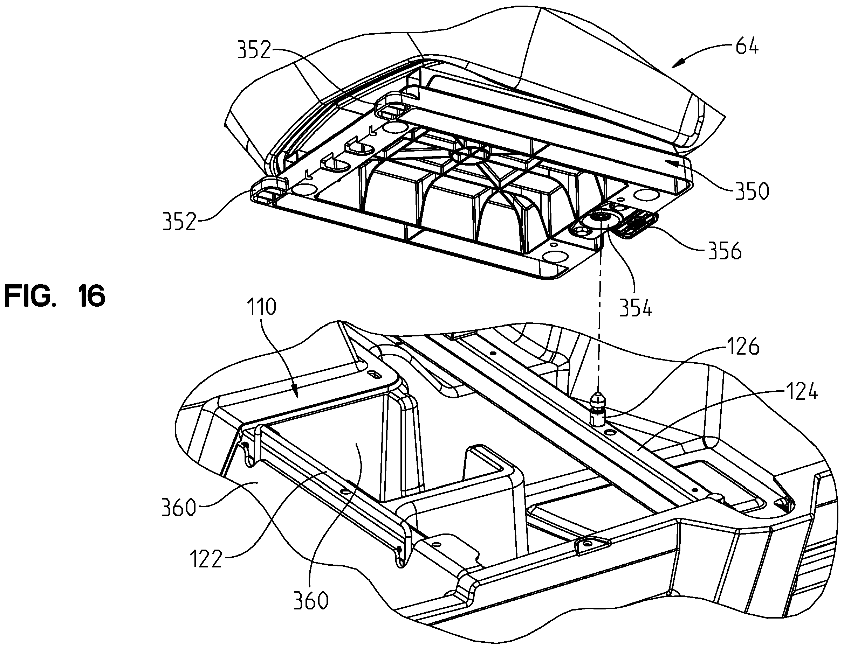

With respect now to Fig. 16, the vehicle 10 provides enhanced serviceability and functionality. As shown, each seat 64, 66 may be removed. The seat 64 is shown having a lower base 350 having locking feet 352 receivable under latch hook 122 and a latch 354 which is receivable over latching pin 126. Latch release 356 releases latch 354 from the latch-locked condition. This provides access to a battery (not shown) in battery box 360. Also as transverse tube 124 is bolted to stand-offs 254 (Fig. 9), removal of tube 124 allows the molded covering 360 to be easily removed.

It should be appreciated that one or more of the rear seats 66 may be removed in an identical manner to that described with respect to front seats 64. Removing one or more of the rear seats may be desired if extra storage space is required and the space is not required for a rider. Also, accessory mounts could be provided (having a similar construction and footprint to that of seat base 350) and snapped in place in one or both seat positions. For example, such accessories could include coolers, tool boxes, trunks, water tanks, fuel containers, camping/fishing gear, a dog crate/kennel, and the like. This enhances the functionality of vehicle 10.

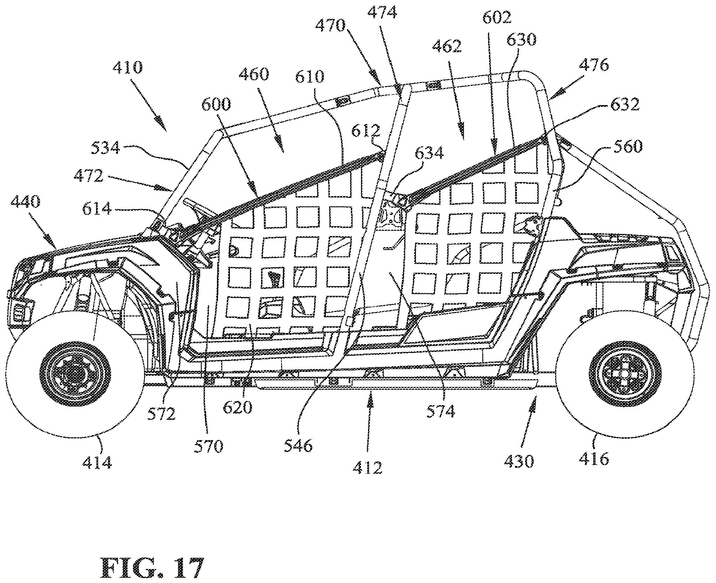

With respect now to Fig. 17, another example of a utility vehicle is shown at 410. The vehicle is substantially similar to that as described in Figs. 1-16. Vehicle 410 includes a frame 412, with ground engaging members 414 and 416 in the form of tires, which are driven by a drive train 430. A body 440 surrounds the frame and forms the outer shell of the vehicle. A front seating area 460 and a rear seating area 462 are formed and would include seats similar to that described above as 64 and 66.

Vehicle 410 also includes a roll cage 470 which defines a canopy around first and second seating areas 460, 462. Roll cage 470 includes a front section 472, a center section 474 and a rear section 476. Roll cage 470 includes a front frame upright 534, a center frame upright 546 and a rear frame upright 560. As shown, a driver's ingress/egress 570 is defined between the center upright 546 and a front left fender 572. Similarly a left rear ingress/egress 574 is defined between center upright 546 and rear upright 570. Right side ingress/egress would also be provided in mirror image to the left hand side of the vehicle.

In this example, and with reference to Fig. 17, a front side net assembly 600 is shown in the latched position and substantially encloses the driver's ingress/egress 570. In a similar manner, a left rear side net assembly 602 is shown which substantially encloses the left rear ingress/egress 574.

As shown, front side net assembly 600 is comprised of a pivotal bar 610 having an end which attaches to a pivot link 612 on the center upright 546 and an opposite end which is attached to a latching tongue 614 attached to front upright 534. Side net assembly 600 further comprises netting 620 fixed to the pivotal bar 610 as further described herein.

In a similar manner, rear side net assembly 602 is comprised of a pivotal bar 630 attached to a pivot link 632 attached to the rear upright 560 and to a latching tongue 634 attached to the rear side of center upright 546.

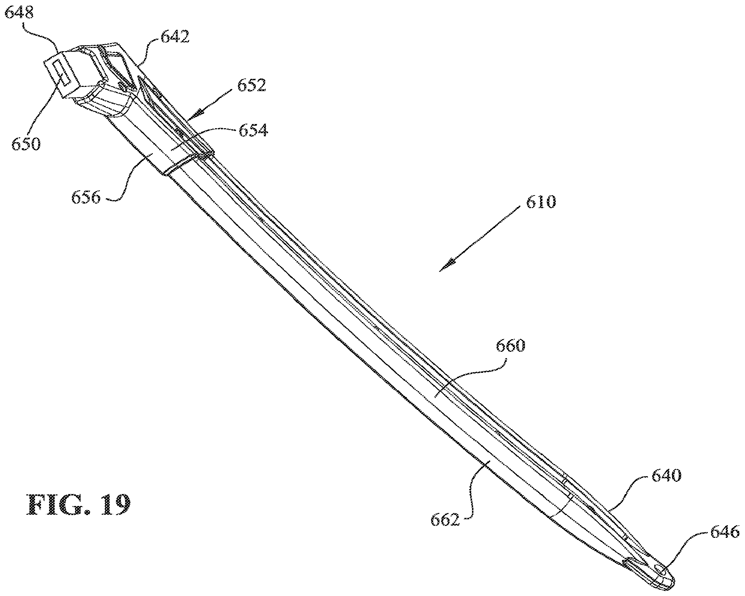

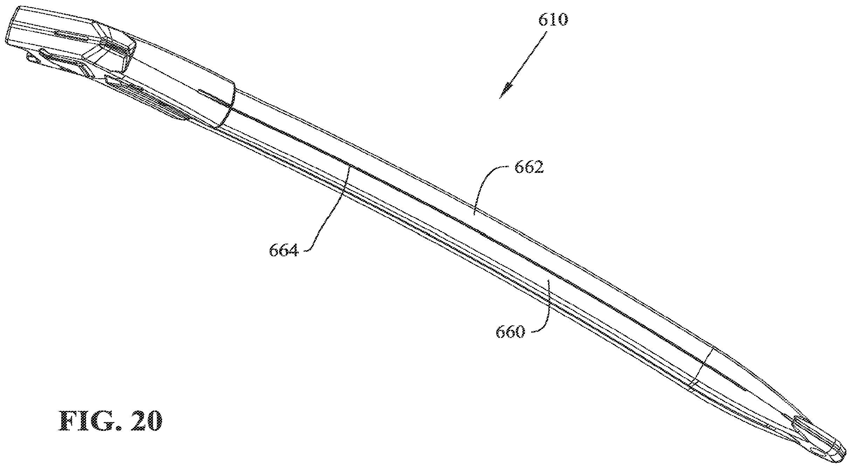

With reference now to Figs. 19-23, pivotal bar 610 will be described in greater detail. As shown, pivot bar 610 includes a first end 640 and a second and opposite end 642. As shown best in Fig. 19, first end 640 includes an aperture 646 for pivotally mounting pivotal bar 16 whereas second end 642 includes a latch assembly 648 which is substantially similar to a seatbelt buckle having a slot 650 for receipt of tongue 614 (Fig. 17). Pivotal bar 610 further includes an end cap 652 comprised of cap parts 654 and 656 which are coupled together to surround latch assembly 648. Pivotal bar 610 further includes elongate halves 660 and 662 which define clamp parts which couple together in a clamshell-style to encompass the netting as described herein. As shown best in Fig. 20, clamp parts 660 and 662 define a slot 664 to receive the netting therethrough.

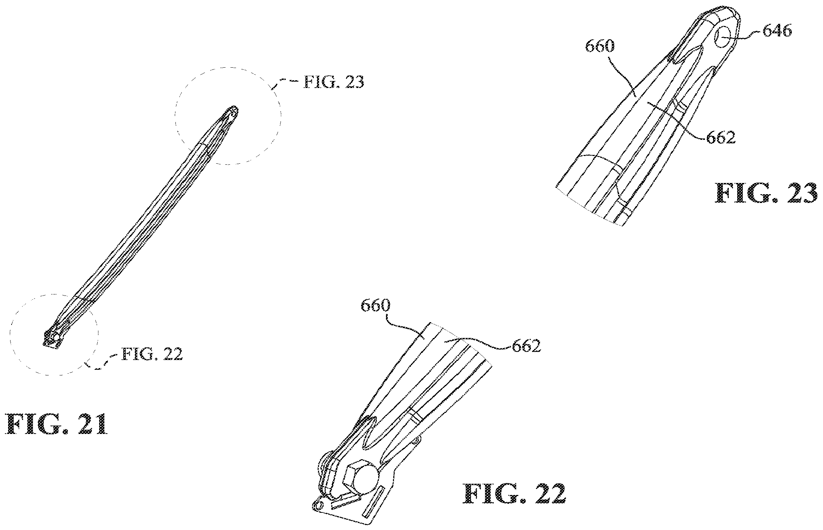

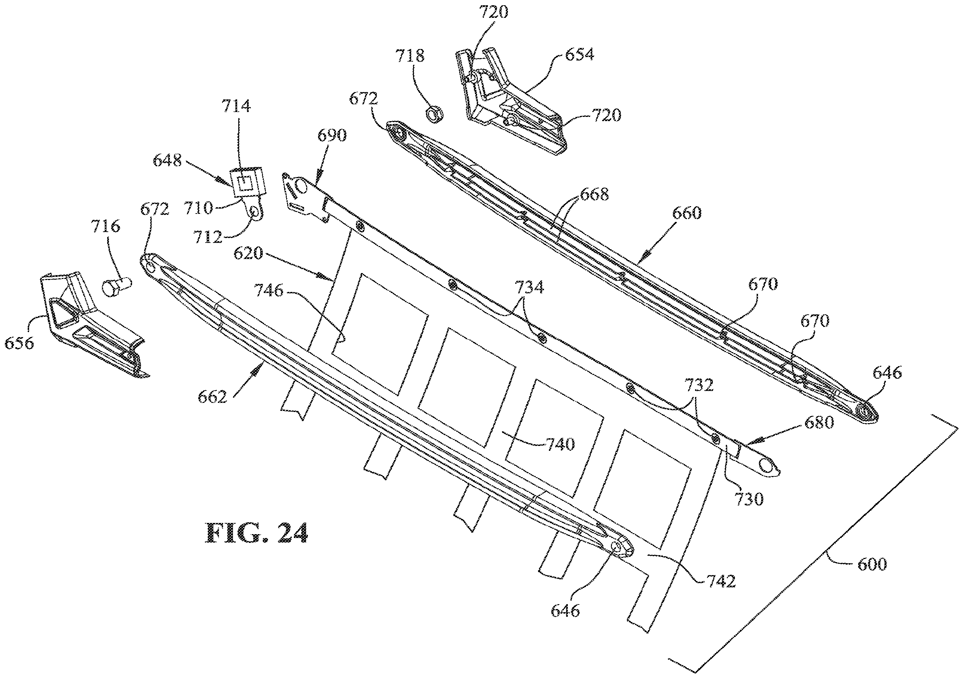

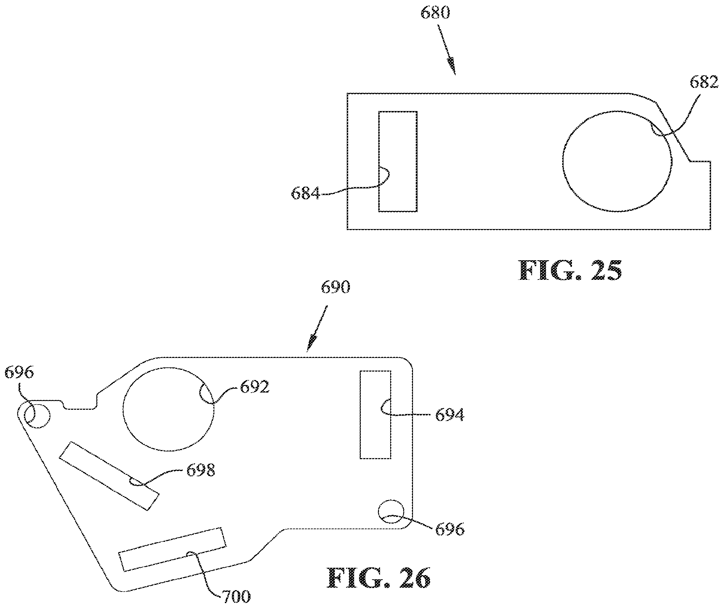

With reference to Figs 21-24, pivotal bar 610 will be described in greater detail. Elongate halves 660, 662 of pivotal bar 610 each include ribs 668, having interruptions at 670 as described herein. An aperture 672 is located opposite to aperture 646. A first clasp 680 is provided at the rearwardmost end of the net 620 (Fig. 24) and as shown best in Fig. 25, includes an aperture 682 and a slot at 684. A second clasp 690 is provided at the forwardmost end of the net 620 (Fig. 24) and as best shown in Fig. 26 includes an aperture 692, slot 694, apertures 696, and slots 698, 700.

As also best shown in Fig. 24, buckle 648 includes a mounting post 710 having an aperture 712. Buckle 648 also includes a release button 714. Fasteners in the form of a bolt 716, and nut 718 are also provided, as described herein. Furthermore, each of the end caps 654, 656 includes standoffs 720 which include apertures therethrough for receipt of other fasteners, as described herein.

With reference still to Fig. 24, netting 620 includes an upper marginal edge 730 having a plurality of openings 732 therethrough which are reinforced by eyelets 734. Netting 620 also includes vertical strap portions 740 and horizontal strap portions 742 which define openings 746 of the netting. It should be appreciated that any material could be used for the netting such as nylon strapping or it could be a one-piece molded pliable plastic material.

To assemble the netting 600, upper marginal edge 730 of the netting is sewn into slots 684 and 694 of the respective clasps 680, 690. Post 710 (Fig. 24) is placed in position adjacent to aperture 692 of clasp 690 (Fig. 26) and bolt 716 may be positioned through apertures 672 of halves 660, 662, passing through aperture 712 of buckle post 710 and through aperture 692 (Fig. 26) of clasp 690. Nut 718 may then be placed on the opposite side of elongate half 660 and joined with bolt 716. It should be appreciated that interruptions 670 provide recesses for the receipt of eyelets 734 and aperture 682 (Fig. 25) is positioned adjacent to apertures 646 of elongate halves 660, 662.

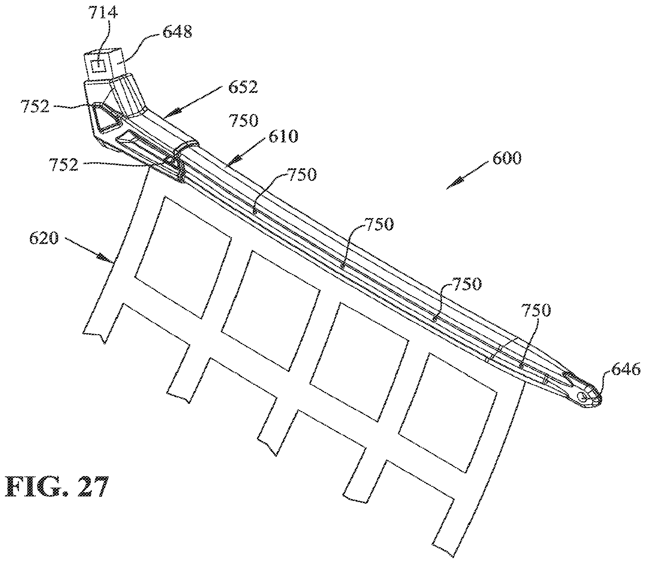

Fasteners may then be positioned through apertures 750 (see Fig. 27) which pass through apertures 732 of eyelets 734 (see Fig. 24) which retain net 620 to the pivotal bar 610. Fasteners are now positioned through apertures 752 (Fig. 27) which extend through standoffs 720 (Fig. 24) and which also pass through apertures 696 (Fig. 26) between the two end cap halves 654, 656. When in position, end cap 648 encompasses fasteners 716, 718, and also positions buckle 648 in its proper upright position. As assembled, side netting 600 can now be attached to central upright 646 by positioning a fastener through aperture 646 (Fig. 27) and through pivot member 612. The lower end of the netting would also include eyelets which are fastened to the vehicle floorboard.

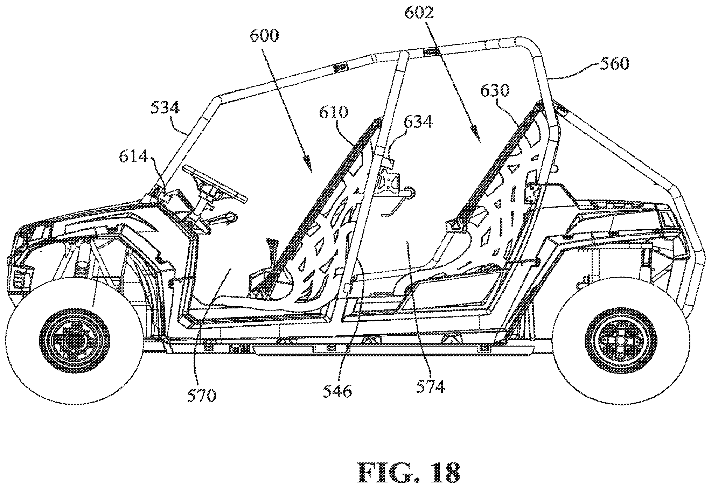

With reference again to Fig. 17, side netting 600 substantially encloses the driver ingress/egress 570 when the buckle 640 is latched to the associated latching tongue 614. When the release button 714 is actuated, the buckle 648 is released from the latching tongue 614 which allows the pivotal bar 610 to rotate counterclockwise to the position shown in Fig. 18, where the pivotal bar 610 and the net 620 are in a collapsed position. This opens up the driver's ingress/egress 570 allowing the driver to enter or exit from the vehicle. It should be appreciated that, and as best viewed in Figs. 19 and 20, the pivotal bar 610 is bowed outwardly which provides increased interior room for the driver. It should also be appreciated that a pivotal bar 610 on the front passenger side, would also be bowed outwardly, or would be a mirror image of the pivotal bar 610 as described and as displayed in Figs. 19 and 20. Finally, it should also be appreciated that pivotal bar 602 could be assembled in an identical manner as just described to cover the ingress/egress 574 for the rear passengers.

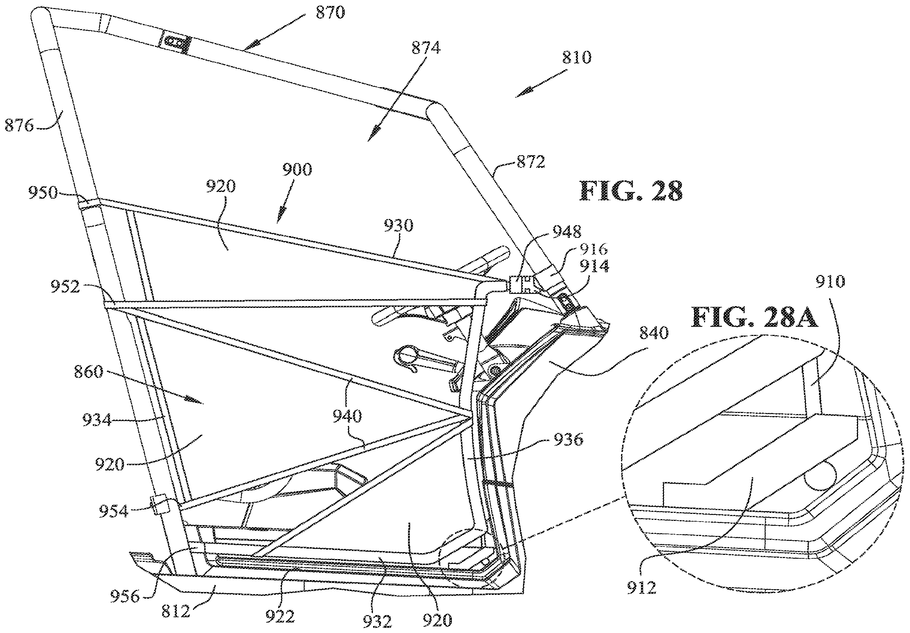

With respect now to Figs. 28-33, another example of a utility vehicle is shown at 810. The vehicle is substantially similar to that as described in Figs. 1-16 or 17-27. The vehicle 810 includes a frame 812, and although not specifically shown, would include ground engaging members in the form of tires, which are driven by a drive train. A body 840 surrounds the frame and forms the outer shell of the vehicle. A front seating area 860 is formed and would include seats similar to that described above as 64 and 66. Vehicle 810 could be a 2 passenger or a 4 passenger vehicle, but as shown is a 2 passenger vehicle.

Vehicle 810 also includes a roll cage 870 which defines a canopy around front seating area 860. Roll cage 870 includes a front section 872 and a rear section 876. Furthermore, the vehicle would include a driver's ingress/egress and a passenger's ingress/egress. The passenger's ingress/egress is shown at 874 between front section 872 and rear section 876.

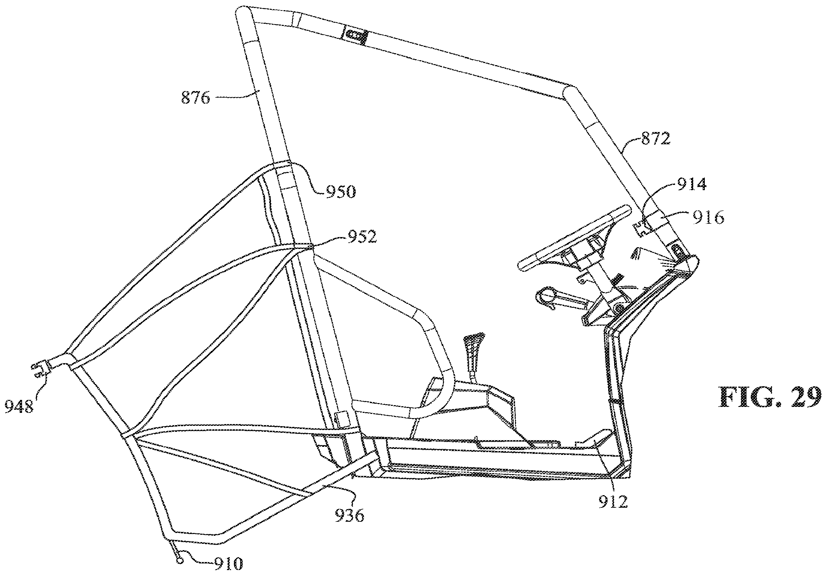

In this example, and with reference to Fig. 28, a side net assembly 900 is shown in the latched position and substantially encloses the passenger's ingress/egress 874. As shown, side net assembly 900 is comprised of a pivotal bar 910 (Fig. 28A) having an end which attaches to a pivot link 912 on the floorboard 922 and an opposite end which is positioned within a marginal edge 936 of netting 920. A latching tongue 914 attaches to front section 872. Latching tongue 914 is tethered to front section 872 by a strap or clamp, and a clip 916 (Figs. 28 and 29) is clipped to the front section 872. The clip 916 has arms which surround and rigidify the latching tongue 914, in order to make the latching process a one handed operation.

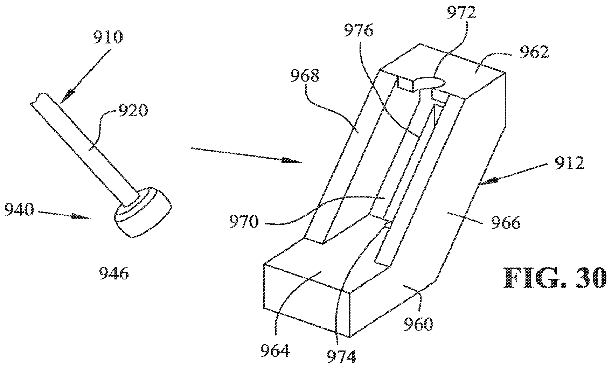

With reference now to Figs. 28A and 30, pivotal bar 910 will be described in greater detail. As shown, pivotal bar 910 includes rod 920 having a first end 940 and a second and opposite end (not shown). As shown best in Figs. 28A and 30, first end 940 includes an enlarged end 946 for pivotally mounting pivotal bar 910 whereas second end is positioned and fixed within the marginal edge 936 of netting 920.

With reference to Fig. 30, pivot link 912 will be described in greater detail. Pivot link 912 includes a trapezoidally shaped body 960 having an upper wall 962, lower wall 964, side walls 966 and 968, and rear wall 970. Upper wall 962 includes a semi-circular opening 972 (opening rearwardly) and lower wall 964 includes a semi-circular opening 974(opening forwardly). Rear wall 970 includes a slot 976 which feeds into semi-circular opening 974. Semi-circular opening 974 is larger than a diameter of rod 920 but smaller than a diameter of enlarged end 946. Slot 976 is larger than a profile of enlarged end 946.

With reference again to Fig. 28, netting 920 includes an upper marginal edge 930, lower marginal edge 932, rear marginal edge 934 and front marginal edge 936. Netting 920 also includes strap portions 940. It should be appreciated that any material could be used for the netting such as nylon strapping or it could be a one-piece molded pliable plastic material.

As also best shown in Figs. 28 and 29, net assembly 900 would include buckle 948 attached to an end of marginal edge 936 of net 900. Buckle 948 includes a release button (not shown) substantially the same as that shown in Fig. 24. Side net 920 is also hinged about the rear section 876 at pointes 950, 952, 954 and 956. This allows the side nets 020 to swing open when latch 948 is released.

With reference still to Fig. 28, side net assembly 900 substantially encloses the driver ingress/egress 874 when the buckle 948 is latched to the associated latching tongue 914. When the release button is actuated, the buckle 948 is released from the latching tongue 914 which allows the net 900 to rotate to the position shown in Fig. 29, where the pivotal bar 910 and the net 920 are in a collapsed position. This opens up the driver's ingress/egress 874 allowing the driver to enter or exit from the vehicle.

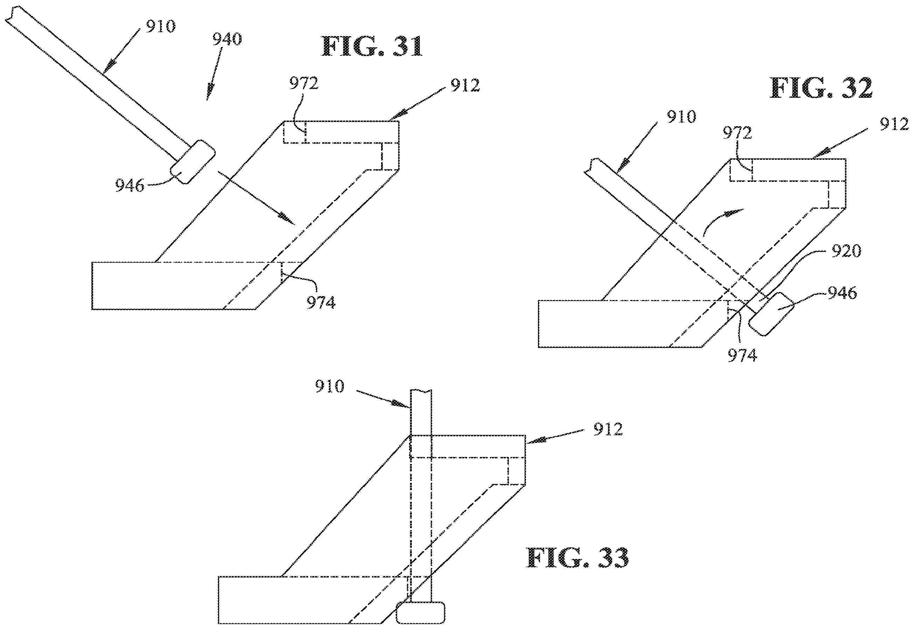

To latch the net assembly 900, and with reference to Figs. 30 - 33, the pivot bar 910 is positioned with enlarged end 946 towards pivot link 912, such that the enlarged end 946 is positioned through slot 976 (Fig. 30). Pivot bar 910 is then rotated as shown in Fig. 32 which positions enlarged end 946 below opening 974, and rod portion 920 in opening 974. Continued rotation of pivot bar 910 to the position of Fig. 33 causes the pivot bar 910 to also be positioned in opening 972. The buckle 948 is then latched with latch 914 to create the latched condition of Fig. 28.

## Claims

1. A utility vehicle (10), comprising a frame (12) extending in a generally longitudinal direction and a drive train (30) supported by the frame, the frame having at least one elongate frame tube assembly (80) comprised of plural tube sections (90, 170) and a frame tube coupler (84) adapted for coupling the frame tube sections (90, 170) of tube assembly (80), the frame tube coupler (84) comprising a first coupler member (200) coupled to a first frame tube section (90) and a second coupler member (200) coupled to a second frame tube section (170), the first and second coupler members (200) having each complementary inter-engaging elements (206, 208) and fasteners for retaining the inter-engaging elements together, where the fasteners are in tension to force the complementary inter-engaging elements (206, 208) into engagement; wherein upon such engagement any shear force on the frame tube coupler (84) is substantially taken up by the complementary inter-engaging elements (206, 208), **characterized in that** each of the first and second coupler members (200) comprises a tube connecting section (202) and an inter-engaging section (204), each inter-engaging section comprises projection (206) and a recess (208) complementary in shape with the projection (206), wherein a projection of the inter-engaging section of either of the first and second coupler members (200) is profiled and positioned for receipt within the recess of the inter-engaging section of the opposite one of the first and second coupler members (200).

2. The utility vehicle of claim 1, **characterized in that** the tube connecting section (202) of the first and second coupler members (200) is insertable into respective ends of the frame tube sections (90, 170).

3. The utility vehicle of any of the preceding claims **characterized in that** the frame tube coupler (84) in use couples the frame tube sections (90, 170) at a longitudinal position within a distance from the front or rear end of the frame of approximately 30% of the length of the frame (12).

4. The utility vehicle of claim 3, **characterized in that** the longitudinal position is lower than a front seating area (60) of the utility vehicle.

5. The utility vehicle of claim 3, **characterized in that** the longitudinal position is lower than a front seating area (60) of the utility vehicle and a rear seating area (62) of the utility vehicle, both the front seating area (60) and the rear seating area (62) having side-by-side seating.

6. The utility vehicle of any of claims 3 - 5 **characterized in that** the longitudinal position is lower than the drive train (30) of the utility vehicle.

## Patentansprüche

1. Nutzfahrzeug (10), umfassend einen Rahmen (12), der sich im Allgemeinen in einer Längsrichtung erstreckt, und einen Antriebsstrang (30), der vom Rahmen getragen wird, wobei der Rahmen mindestens eine längliche Rahmenrohranordnung (80) aufweist, die aus einer Mehrzahl von Rohrabschnitten (90, 170) und einem Rahmenrohrkoppler (84) besteht, der zum Koppeln der Rahmenrohrabschnitte (90, 170) der Rohranordnung (80) ausgelegt ist, der Rahmenrohrkoppler (84) ein erstes Koppelelement (200), das mit einem ersten Rahmenrohrabschnitt (90) gekoppelt ist, und ein zweites Koppelelement (200) umfasst, das mit einem zweiten Rahmenrohrabschnitt (170) gekoppelt ist, die ersten und zweiten Koppelelemente (200) jeweils komplementäre Eingriffselemente (206, 208) und Befestigungselemente zum Zusammenhalten der Eingriffselemente aufweisen, wobei die Befestigungselemente unter Spannung sind, um die komplementären Eingriffselemente (206, 208) in Eingriff zu zwingen; wobei bei solch einem Eingriff jegliche Scherkraft auf den Rahmenrohrkoppler (84) im Wesentlichen durch die komplementären Eingriffselemente (206, 208) aufgenommen wird, **dadurch gekennzeichnet, dass** jedes der ersten und zweiten Koppelelemente (200) einen Rohrverbindungsabschnitt (202) und einen Eingriffsabschnitt (204) umfasst, jeder Eingriffsabschnitt einen Vorsprung (206) und eine Aussparung (208) mit einer zum Vorsprung (206) komplementären Form umfasst, wobei ein Vorsprung des Eingriffsabschnitts eines der ersten und zweiten Koppelelemente (200) profiliert ist und zur Aufnahme innerhalb der Aussparung des Eingriffsabschnitts des gegenüberliegenden des ersten und zweiten Koppelelements (200) positioniert ist.

2. Nutzfahrzeug nach Anspruch 1,
**dadurch gekennzeichnet, dass** der Rohrverbindungsabschnitt (202) der ersten und zweiten Koppelelemente (200) in entsprechende Enden der Rahmenrohrabschnitte (90, 170) eingeführt werden kann.

3. Nutzfahrzeug nach einem der vorhergehenden Ansprüche, **dadurch gekennzeichnet, dass** der Rahmenrohrkoppler (84) in Verwendung die Rahmenrohrabschnitte (90, 170) in einer Längsposition innerhalb einer Entfernung vom vorderen oder hinteren Ende des Rahmens von ungefähr 30 % der Länge des Rahmens (12) koppelt.

4. Nutzfahrzeug nach Anspruch 3,
**dadurch gekennzeichnet, dass** die Längsposition niedriger als eine Vordersitzfläche (60) des Nutzfahrzeugs ist.

5. Nutzfahrzeug nach Anspruch 3,
**dadurch gekennzeichnet, dass** die Längsposition niedriger als eine Vordersitzfläche (60) des Nutzfahrzeugs und eine Rücksitzfläche (62) des Nutzfahrzeugs ist, wobei sowohl die Vordersitzfläche (60) als auch die Rücksitzfläche (62) nebeneinander liegende Sitzgelegenheiten aufweisen.

6. Nutzfahrzeug nach einem der Ansprüche 3 bis 5,
**dadurch gekennzeichnet, dass** die Längsposition niedriger als der Antriebsstrang (30) des Nutzfahrzeugs ist.

## Revendications

1. Véhicule utilitaire (10) comprenant un bâti (12) s'étendant dans une direction généralement longitudinale et un train d'entraînement (30) supporté par le bâti, le bâti ayant au moins un ensemble de tube de bâti allongé (80) composé de plusieurs sections de tube (90, 170) et d'un dispositif de couplage de tube de bâti (84) adapté pour coupler les sections de tube de bâti (90, 170) de l'ensemble de tube (80), le dispositif de couplage de tube de bâti (84) comprenant un premier élément de dispositif de couplage (200) couplé à une première section de tube de bâti (90) et un second élément de dispositif de couplage (200) couplé à une seconde section de tube de bâti (170), les premier et second éléments de dispositif de couplage (200) ayant chacun, des éléments d'imbrication complémentaires (206, 208) et des fixations pour retenir les éléments d'imbrication ensemble, dans lequel les fixations sont en tension pour forcer les éléments d'imbrication complémentaire (206, 208) en mise en prise ; dans lequel suite à une telle mise en prise, toute force de cisaillement sur le dispositif de couplage de tube de bâti (84) est sensiblement absorbée par les éléments d'imbrication complémentaires (206, 208), **caractérisé en ce que** chacun des premier et second éléments de dispositif de couplage (200) comprend une section de raccordement de tube (202) et une section de mise en prise (204), chaque section de mise en prise comprend une saillie (206) et un évidement (208) complémentaire du point de vue de la forme de la saillie (206), dans lequel une saillie de la section de mise en prise de l'un ou l'autre des premier et second éléments de dispositif de couplage (200) est profilée et positionnée pour la réception dans l'évidement de la section de mise en prise d'un élément opposé des premier et second éléments de dispositif de couplage (200).

2. Véhicule utilitaire selon la revendication 1,
**caractérisé en ce que** la section de raccordement de tube (202) des premier et second éléments de dispositif de couplage (200) peut être insérée dans des extrémités respectives des sections de tube de bâti (90, 170).

3. Véhicule utilitaire selon l'une quelconque des revendications précédentes, **caractérisé en ce que** le dispositif de couplage de tube de bâti (84), couple, à l'usage, les sections de tube de bâti (90, 170) dans une position longitudinale dans les limites d'une distance par rapport à l'extrémité avant ou arrière du bâti représentant approximativement 30 % de la longueur du bâti (12).

4. Véhicule utilitaire selon la revendication 3,
**caractérisé en ce que** la position longitudinale est plus basse qu'une zone de siège avant (60) du véhicule utilitaire.

5. Véhicule utilitaire selon la revendication 3,
**caractérisé en ce que** la position longitudinale est plus basse qu'une zone de siège avant (60) du véhicule utilitaire et qu'une zone de siège arrière (62) du véhicule utilitaire, à la fois la zone de siège avant (60) et la zone de siège arrière (62) ayant une assise côte à côte.

6. Véhicule utilitaire selon l'une quelconque des revendications 3 à 5,
**caractérisé en ce que** la position longitudinale est plus basse que le train d'entraînement (30) du véhicule utilitaire.
